# EUROPEAN PATENT APPLICATION

(11) **EP 4 160 260 A1**
(43) Date of publication of application: **05.04.2023**
(21) Application number: 21830251.1
(22) Date of filing: 23.06.2021
(51) Int. Cl.: G01S 7/481, G01S 17/08

(54) **RADAR AND VEHICLE**

(30) Priority: 24.06.2020 CN 202010592268
(71) Applicant: Huawei Technologies Co., Ltd., Longgang District, Shenzhen, Guangdong 518129 (CN)
(72) Inventor: FEI, Yonghao, Shenzhen, Guangdong 518129 (CN); LI, Huiping, Shenzhen, Guangdong 518129 (CN)
(74) Representative: Maiwald GmbH
(86) International application number: PCT/CN2021/101776
(87) International publication number: WO 2021/259314

(57) **Abstract**

A radar (100) and a vehicle are provided. The radar (100) includes a light source (101), a first beam diffraction element (103), a second beam diffraction element (104), a reflection assembly (105), and a detector (108). The first beam diffraction element (103) is configured to diffract a ray emitted by the light source (101) into at least two first beams (a, b, c). The second beam diffraction element (104) is configured to converge the at least two first beams (a, b, c) to a specified position. Then, the at least two first beams are reflected to a detection area (106) by the reflection assembly (105). The reflection assembly (105) includes a reflector configured to reflect the at least two first beams (a, b, c) converged to the specified position to a detection area (106), and a driving mechanism configured to drive the reflector to swing. The detector (108) is configured to receive at least two second beams (a', b', c') reflected back from the detection area (106). Through cooperation of the first beam diffraction element (103) and the second beam diffraction element (104), the ray emitted by the light source (101) is diffracted into the at least two first beams (a, b, c), and detection may be performed by using the two first beams (a, b, c), thereby increasing a range of the detection area (106). In addition, the detection area (106) may be expanded by using one light source (101), so that a structure of the entire radar (100) is simplified.

## Description

### CROSS-REFERENCE TO RELATED APPLICATIONS

This application claims priority to Chinese Patent Application No. 202010592268.4, filed with the China National Intellectual Property Administration on June 24, 2020 and entitled "RADAR AND VEHICLE", which is incorporated herein by reference in its entirety.

### TECHNICAL FIELD

This application relates to the field of communications technologies, and in particular, to a radar and a vehicle.

### BACKGROUND

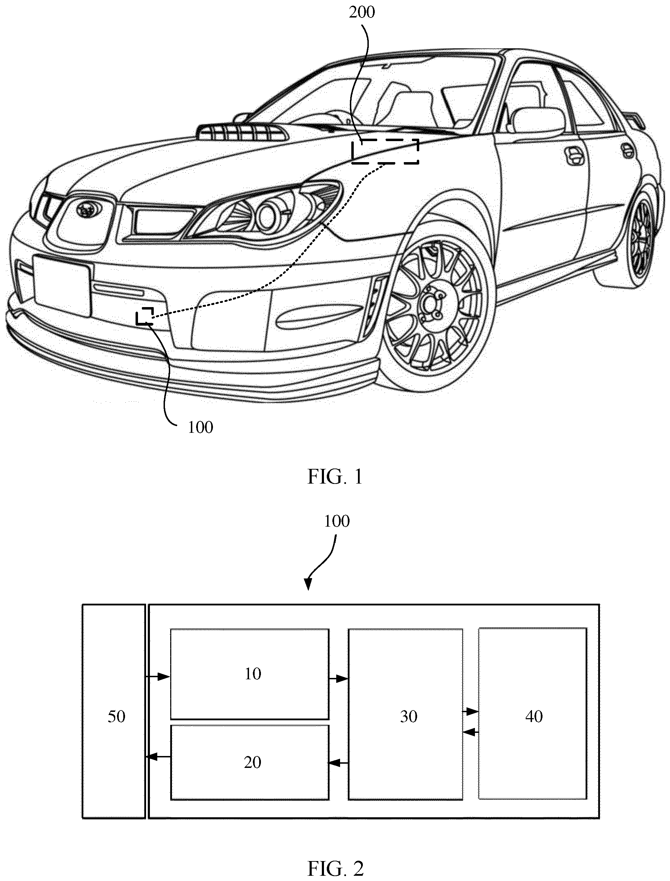

With development of the Internet of Things and 5G, automated driving becomes a development trend in the future. At present, automated driving is mainly divided into five levels. As shown in FIG. 1, a long-range scanning radar is a necessary means for a level higher than L3. A test distance may reach more than 200 meters, and accuracy is high.

For an existing laser radar, technical classification is shown below. At present, the existing laser radar mainly uses mechanical scanning, but has a bulky structure, high costs, and a cumbersome technology. A driving mechanism with a small size and a simple technology is a most competitive solution for a next-generation radar.

A core scanning component of an MEMS radar is an MEMS (Micro-Electro-Mechanical System, micro-electro-mechanical system) rotating mirror. Compared with an MEMS used in a conventional communication application, the MEMS rotating mirror has higher requirements on a luminous area, an FOV (Field of View, field of view), and mechanical strength. From a perspective of a theoretical model, the foregoing three parameters are mutually restricted, and the three parameters cannot be simultaneously optimal. Consequently, performance of the radar is affected.

### SUMMARY

This application provides a radar and a vehicle, to improve performance of the radar.

According to a first aspect, a radar is provided. The radar is applied to a vehicle, and is used as an important detection tool when the vehicle travels. Therefore, performance of the radar directly affects safety of the vehicle. The radar provided in this application includes a light source, a first beam diffraction element, a second beam diffraction element, a reflection assembly, and a detector. The light source is configured to emit a ray for detection. The first beam diffraction element is configured to diffract the ray into at least two first beams. The second beam diffraction element is configured to converge the at least two first beams to a specified position. Then, the at least two first beams are reflected to a detection area by the reflection assembly. The reflection assembly includes a reflector configured to reflect the at least two first beams converged to the specified position to the detection area, and a driving mechanism configured to drive the reflector to swing. The detector is configured to receive at least two second beams reflected back from the detection area, and transmit a signal to a subsequent component. In the foregoing technical solution, through cooperation of the first beam diffraction element and the second beam diffraction element, the ray emitted by the light source is diffracted into the at least two first beams, and detection may be performed by using the two first beams, thereby increasing a range of the detection area. In addition, the detection area may be expanded by using one light source, so that a structure of the entire radar is simplified, and the performance of the radar is improved.

In a specific feasible solution, the first beam diffraction element is configured to diffract the ray into an odd quantity of first beams. Detection is implemented by using different quantities of rays obtained through diffraction.

In a specific feasible solution, the first beam diffraction element is a beam splitter, and the second beam diffraction element is a beam combiner. The beam splitter and the beam combiner are used to scatter and gather rays, to facilitate reflection by the reflection assembly.

In a specific feasible solution, when the second beam diffraction element converges the at least two first beams to the specified position, incident angles of the first beams are different, thereby ensuring that each first beam may detect a different area.

In a specific feasible solution, the specified position is a reflective surface of the reflector, thereby improving a reflection effect.

In a specific feasible solution, the reflector is further configured to reflect the at least two second beams reflected back from the detection area. The radar further includes a split-beam reflection diaphragm, and the split-beam reflection diaphragm is located in an optical path between the second beam diffraction element and the reflection assembly. The split-beam reflection diaphragm is configured to transmit the at least two first beams converged by the second beam diffraction element, and reflect the at least two second beams reflected back by the reflector.

The detector is configured to receive the at least two second beams reflected by the split-beam reflection diaphragm. The split-beam reflection diaphragm is disposed to further improve compactness of the radar, thereby reducing a volume of the radar.

In a specific feasible solution, the split-beam reflection diaphragm includes: a body, where a light transmission structure configured to transmit the at least two first beams is disposed on the body; and a reflection layer, which is disposed on a side that is of the body and that is close to the reflector, and avoids the light transmission structure, where the reflection layer is configured to reflect the at least two second beams. In this way, effects of light transmission and light reflection are improved.

In a specific feasible solution, the light transmission structure is a through hole disposed on the body; or the light transmission structure is a partial light transmission area of the body. Light transmission is implemented by using different structures.

In a specific feasible solution, when the light transmission structure is a partial light transmission area of the body, an anti-reflection layer is disposed on a side that is of the light transmission area and that is close to the second beam diffraction element, to reduce reflection of an incident ray.

In a specific feasible solution, the split-beam reflection diaphragm further includes a light absorption layer. The light absorption layer is disposed on a side that is of the body and that is close to the second beam diffraction element, and the light absorption layer avoids the light transmission structure, thereby reducing impact of stray light.

In a specific feasible solution, a receiving lens is further included, and is configured to receive the at least two second beams reflected by the split-beam reflection diaphragm, and converge the at least two second beams to the detector. The second beams are gathered by using the receiving lens, to facilitate reception by the detector.

In a specific feasible solution, the detector directly receives the at least two second beams reflected from the detection area. The second beams reflected from the detection area may be directly shone onto the detector, thereby simplifying a component of the radar.

In a specific feasible solution, the detector and the reflector are disposed side by side, to facilitate disposing of a component.

In a specific feasible solution, in the at least two first beams, detection areas corresponding to adjacent first beams partially overlap, thereby avoiding omission, and improving detection accuracy.

In a specific feasible solution, a collimation structure is further included. The collimation structure is configured to collimate the ray emitted by the light source to the first beam diffraction element, to facilitate splitting of the ray by the first beam diffraction element.

According to a second aspect, a vehicle is provided. The vehicle includes an information processing module, and the radar that is described in any one of the foregoing and that is connected to the information processing module. In the foregoing technical solution, through cooperation of the first beam diffraction element and the second beam diffraction element, the ray emitted by the light source is diffracted into the at least two first beams, and detection may be performed by using the two first beams, thereby increasing a range of the detection area. In addition, the detection area may be expanded by using one light source, so that a structure of the entire radar is simplified, and the performance of the radar is improved.

### BRIEF DESCRIPTION OF DRAWINGS

FIG. 1 is a schematic diagram of an application scenario of a radar according to an embodiment of this application;
FIG. 2 is a schematic diagram of an optical path system of a radar according to an embodiment of this application;
FIG. 3 is a schematic diagram of a structure of a radar according to an embodiment of this application;
FIG. 4 is a schematic diagram of a structure of a first grating according to an embodiment of this application;
FIG. 5 is a schematic diagram of a structure of a second grating according to an embodiment of this application;
FIG. 6 is a schematic diagram of a structure of a third grating according to an embodiment of this application;
FIG. 7 is a schematic diagram of a structure of a fourth grating according to an embodiment of this application;
FIG. 8 is a schematic diagram of a structure of a fifth grating according to an embodiment of this application;
FIG. 9 is a schematic diagram of a structure of a split-beam reflection diaphragm according to an embodiment of this application; and
FIG. 10 is a schematic diagram of a structure of a second radar according to an embodiment of this application.

### DESCRIPTION OF EMBODIMENTS

The following further describes in detail embodiments of this application with reference to the accompanying drawings.

A radar is applied to a vehicle, and the vehicle includes but is not limited to a vehicle driven by non-renewable energy or new energy. The vehicle driven by non-renewable energy may include a car, a bus, a truck, and the like that are driven by fuel such as gasoline, diesel, alcohol, and the like. The vehicle driven by new energy may include a car, a bus, a truck, and the like that are driven by electric energy.

The radar is configured to detect an ambient environment of the vehicle, and feed back detected data to a central control computer of the vehicle, to provide the data for the central control computer to perform information judgment. FIG. 1 shows a schematic diagram of a radar disposed in a car. A dashed line in FIG. 1 shows data interaction between a radar 100 and an information processing module 200, and does not represent an actual connection cable between the radar 100 and the information processing module 200. In a traveling process of the car, the radar 100 may detect an external environment in a detection area of the radar 100, and feed back detected information to the information processing module 200, so that the information processing module 200 performs judgment by using detected data of the radar 100. The information processing module 200 may be a central control computer on the car or another chip having a signal processing function, and the radar 100 may be a laser radar or another type of radar. The laser radar is an indispensable technology in automated driving. Compared with a camera, an advantage of the laser radar lies in accurate establishment of a 3D model and night driving. The laser radar may provide more abundant and accurate data, and build a simulation environment more easily, to help judge interaction between a surrounding vehicle and an object. In addition, the laser radar is also a key component in a current traffic sign recognition system, an adaptive cruise control (Adaptive Cruise Control, ACC for short) system, a blind spot detection system, an anti-collision system, a lane departure warning system, and the like. An FOV (Field of view, field of view) of a laser radar in a current market is relatively small, and a relatively large FOV is usually achieved by stacking a plurality of light sources, which is complex in technologies, high in costs, and difficult to balance performance and costs in competitiveness. Therefore, the embodiments of this application provide a radar. The following describes the radar in detail with reference to specific accompanying drawings and embodiments.

First, a "first beam" and a "second beam" in the embodiments of this application are described. The first beam is a detection ray, and the second beam is a ray reflected after the first beam is shone onto a detected object.

FIG. 2 shows an optical path system of a radar according to an embodiment of this application. The radar includes a light emitting system 10, a light scanning system 30, and a light receiving system 20.

A ray emitted by the emitting system 10 is shone onto the light scanning system 30, and the light scanning system 30 controls the ray to perform scanning in a detection area 40. A ray reflected by a detected object is reflected to the light scanning system 30, and then reflected to the light receiving system 20. The light receiving system 20 converts an optical signal into an electrical signal, to complete a detection function of the radar. The radar may further include a control and data processing module 50. The control and data processing module 50 is separately connected to the light emitting system 10 and the light receiving system 20, to control the light emitting system 10 to emit laser light, and may receive a ray from the light receiving system 20 and convert the ray into an electrical signal.

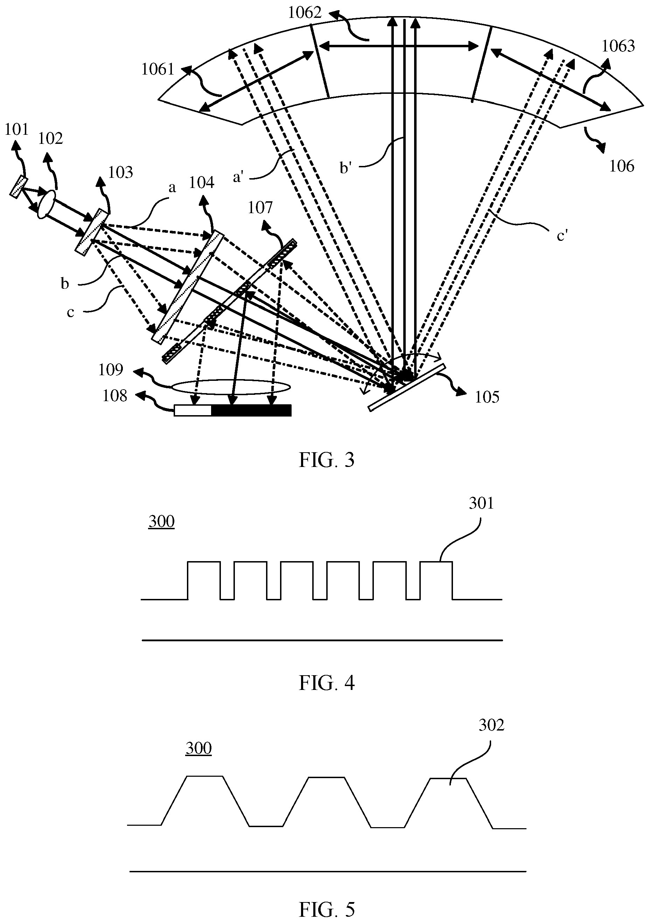

FIG. 3 shows a schematic diagram of a structure of a radar according to an embodiment of this application. The radar provided in this embodiment of this application includes components such as a light source 101, a first beam diffraction element 103, a second beam diffraction element 104, a reflection assembly 105, and a detector 108. The light source 101, the first beam diffraction element 103, and the second beam diffraction element 104 serve as a light emitting system, the reflection assembly 105 serves as a light scanning system, and the detector 108 serves as a light receiving system.

The light source 101 is configured to emit a ray for detection. The ray is non-visible light, for example, a ray with a wavelength greater than 760 nm. The light source 101 may be selected from different light sources, such as an LED lamp, a laser transmitter, or another light source that may emit parallel light. In an optional solution, the light source 101 uses a laser transmitter, and emitted laser light has advantages such as good coherence, good parallelism, and high brightness, and is suitable for detection.

In an optional solution, when rays emitted by the light source 101 are divergent rays, the light emitting system further includes a collimation structure 102, configured to collimate a ray emitted by the light source 101 to the first beam diffraction element 103. The collimation structure 102 is disposed in an optical path between the light source 101 and the first beam diffraction element 103. After rays emitted by the light source 101 are shone onto the collimation structure 102, the rays are refracted into parallel rays by the collimation structure 102 (the rays are collimated), and then the parallel rays are shone onto the first beam diffraction element 103. The collimation structure 102 may be implemented by using different structures. For example, the collimation structure 102 may use a single lens or a combination of lenses. Specifically, the collimation structure 102 may use a common lens that refracts divergent rays into parallel rays, such as a single-sided convex lens, a double-sided convex lens, or a prism. Alternatively, the collimation structure 102 may use different lens combinations such as a combination of a convex lens and a concave lens, a combination of a convex lens and a convex lens, or a combination of a convex lens and a prism, to refract divergent rays into parallel rays.

The collimation structure 102 is an optional component. When rays emitted by the light source 101 are parallel rays, the collimation structure 102 may not be used, and the rays emitted by the light source 101 may be directly shone onto the first beam diffraction element 103.

The first beam diffraction element 103 is configured to diffract the rays into at least two first beams. For example, rays shown in FIG. 3 are diffracted into three first beams when passing through the first beam diffraction element 103, and the rays are divided into a first beam a, a first beam b, and a first beam c after passing through the first beam diffraction element 103. The first beam a, the first beam b, and the first beam c may all be used as rays for scanning. The first beam a, the first beam b, and the first beam c may scan different areas when scanning is performed by using the reflection assembly 105.

It should be understood that a quantity of first beams obtained through diffraction by the first beam diffraction element 103 provided in this embodiment of this application is not limited to the three shown in FIG. 3, and a quantity of first beams that need to be obtained through diffraction may be selected based on a specific actual situation. For example, one ray may be diffracted by the first beam diffraction element 103 into different quantities of first beams, such as two first beams, three first beams, four first beams, and five first beams.

In an optional solution, the first beam diffraction element 103 is configured to diffract the ray into an odd quantity of first beams. When an odd quantity of first beams are used, a corresponding detection area 106 is divided into an odd quantity of areas, and an area located in the middle of the detection area 106 may be scanned by using one first beam, for example, the first beam b shown in FIG. 3.

When the detection area 106 is specifically scanned, an odd quantity of first beams may be used, or an even quantity of first beams may be used. In a comparison of the two, when an even quantity of first beams are used to perform scanning, a pattern needs to be formed through splicing after a middle area of the detection area 106 is scanned by using two first beams. However, when an odd quantity of first beams are used to perform scanning, a position in the middle of the detection area 106 is scanned by using only one first beam, so that an effect of detecting the middle area of the detection area 106 may be improved.

The second beam diffraction element 104 is configured to converge the at least two first beams to a specified position, to facilitate reflection by the reflection assembly 105. In the example shown in FIG. 3, when the first beam a, the first beam b, and the first beam c pass through the second beam diffraction element 104, an incident angle of the first beam b is perpendicular to an incident surface of the second beam diffraction element 104, the first beam b directly passes through the second beam diffraction element 104, and a propagation direction remains unchanged. The first beam a and the first beam c are shone onto the incident surface of the second beam diffraction element 104 at a specific incident angle (less than 90°). When emitted from the second beam diffraction element 104, propagation directions of the first beam a and the first beam c approach the first beam b, and the specified position to which the first beam a, the first beam b, and the first beam c are converged may be a reflective surface of the reflection assembly 105. When shone onto the reflective surface, the first beam a, the first beam b, and the first beam c may be converged to a point or an area.

When the second beam diffraction element 104 converges the at least two first beams to the specified position, incident angles of the first beams are different. As shown in FIG. 3, when the first beam a, the first beam b, and the first beam c are shone onto the reflective surface, incident angles of the first beam a, the first beam b, and the first beam c are all different, to ensure that the first beam a, the first beam b, and first beam c may be reflected at different angles and shone to different detection positions in the detection area when reflected by the reflective surface.

The reflection assembly 105 is configured to implement radar detection scanning, and may include a reflector and a driving mechanism. The reflector has a reflective surface configured to reflect the at least two first beams converged to the specified position, and the reflective surface is the reflective surface of the reflection assembly 105 described above. The specified position is the reflective surface of the reflector, and the first beam a, the first beam b, and the first beam c may be converged to a point or an area on the reflective surface.

When shone onto the reflective surface, the first beam may be reflected by the reflective surface to the detection area 106. The first beam a, the first beam b, and the first beam c shown in FIG. 3 are used as an example. When the first beam a, the first beam b, and the first beam c are shone onto the reflective surface, the incident angles of the first beam a, the first beam b, and the first beam c are different, so that the first beam a, the first beam b, and first beam c may be shone to different areas of the detection area 106. For ease of description, the detection area 106 is divided into three sub-areas: a first sub-area 1061, a second sub-area 1062, and a third sub-area 1063. The first sub-area 1061 corresponds to the first beam a, and the first sub-area 1061 is an area scanned by the first beam a when the reflector swings. The second sub-area 1062 corresponds to the first beam b, and the second sub-area 1062 is an area scanned by the first beam b when the reflector swings. The third sub-area 1063 corresponds to the first beam c, and the third sub-area 1063 is an area scanned by the first beam c when the reflector swings. The first beam a, the first beam b, and the first beam c are used to scan the corresponding first sub-area 1061, the second sub-area 1062, and the third sub-area 1063, to implement scanning of the entire detection area 106 by the radar.

Division of the detection area in FIG. 3 is merely an example. When the first beam diffraction element 103 obtains a plurality of first beams through splitting, the corresponding detection area 106 is also divided into a plurality of sub-areas, and a quantity of sub-areas is in a one-to-one correspondence with a quantity of first beams.

The reflector may be different reflectors such as a plane reflector, a concave reflector, or a convex reflector, and only needs to reflect the first beam a, the first beam b, and the first beam c to the detection area 106.

The driving mechanism is configured to provide power for the reflector to swing. The driving mechanism is connected to the reflector, and is located on a side that is of the reflector and that is away from the reflective surface. The driving mechanism may use a common mechanism that may implement swinging, such as a four-link mechanism, a cam mechanism, an intermittent motion mechanism, or an MEMS (Micro-Electro-Mechanical System, micro-electro-mechanical system). When in use, the driving mechanism drives the reflector to swing around an axis in an arrow direction shown in FIG. 3. When the reflector swings, incident angles at which the first beam a, the first beam b, and the first beam c are shone onto the reflective surface constantly change, and emergent angles also constantly change, to implement scanning of the three sub-areas.

In an optional solution, in the at least two first beams, detection areas corresponding to any adjacent first beams partially overlap, thereby avoiding omission during scanning, and improving detection accuracy. For example, there is an overlapping area between the first sub-area 1061 scanned by the first beam a and the second sub-area 1062 scanned by the first beam b. When the first beam a and the first beam b perform scanning, the first beam a and the first beam b both scan the overlapping area between the first sub-area 1061 and the second sub-area 1062. There is an overlapping area between the second sub-area 1062 scanned by the first beam b and the third sub-area 1063 scanned by the first beam c. When the first beam b and the first beam c perform scanning, the first beam b and the first beam c both scan the overlapping area between the second sub-area 1062 and the third sub-area 1063. When the foregoing solution is used, a boundary between sub-areas is prevented from being omitted, and an overlapping area of sub-area boundaries is repeatedly scanned. Then, information of the first sub-area 1061, the second sub-area 1062, and the third sub-area 1063 may be spliced into complete information of the detection area 106 through later data processing. The foregoing data processing may be common image splicing processing, and details are not described herein.

After the first beam a, the first beam b, and the first beam c are shone to the detection area 106, a detected object in the detection area 106 reflects back the beams. A reflected beam is a second beam. Using the foregoing three first beams as an example, corresponding reflected beams are: a second beam a' that is a reflected beam of the first beam a, a second beam b' that is a reflected beam of the first beam b, and a second beam c' that is a reflected beam of the first beam c. When the beams are shone onto the detected object, reflection may be performed in different directions, so that each first beam corresponds to a plurality of second beams. The detector 108 only needs to receive a second beam in one direction to implement detection on the detected object.

FIG. 3 illustrates a detector placement manner in which coaxial reception is used. The reflector in the reflection assembly 105 is further configured to reflect at least two second beams reflected back from the detection area 106. Using the three second beams shown in FIG. 3 as an example, shining paths of the second beam a', the second beam b', and the second beam c' are opposite to shining paths of the first beam a, the first beam b, and the first beam c. After being emitted from the detection area 106, the second beam a', the second beam b', and the second beam c' are first shone onto the reflector in the reflection assembly 105, and after being reflected by the reflector, the second beam a', the second beam b', and the second beam c' are shone in a direction opposite to a shining direction of the first beam a, the first beam b, and the first beam c. To prevent the second beam a', the second beam b', and the second beam c' from being shone back onto the second beam diffraction element 104, a split-beam reflection diaphragm 107 is disposed in the radar provided in this embodiment of this application. The split-beam reflection diaphragm 107 is located in an optical path between the second beam diffraction element 104 and the reflection assembly 105. When disposed at the position, the split-beam reflection diaphragm 107 should not affect propagation of the at least two first beams, and should also prevent the reflected second beams from being shone onto the second beam diffraction element 104. Therefore, the split-beam reflection diaphragm 107 provided in this embodiment of this application may transmit the at least two first beams converged by the second beam diffraction element 104, and may reflect the at least two second beams reflected back by the reflector.

In an optional solution, a reflective surface of the split-beam reflection diaphragm 107 faces the reflector, and there is a specified included angle between the reflective surface and the optical path (the optical path between the second beam diffraction element 104 and the reflection assembly 105), to change a propagation path of the second beams, so that the reflected second beams may be shone onto the detector 108. For example, the included angle between the reflective surface of the split-beam reflection diaphragm 107 and the optical path is different angles such as 60°, 45°, or 30°, and the included angle between the reflective surface of the split-beam reflection diaphragm 107 and the optical path matches the detector 108, so that a ray reflected by the split-beam reflection diaphragm 107 may be shone onto the detector 108.

The detector 108 is configured to receive the at least two second beams reflected by the split-beam reflection diaphragm 107. To receive all second beams, a receiving surface of the detector 108 is also correspondingly divided into a plurality of areas, and each area correspondingly receives one second beam. The second beam a', the second beam b', and the second beam c' are used as an example. The receiving surface of the detector 108 is divided into a first receiving area, a second receiving area, and a third receiving area. The first receiving area is used to receive the second beam a', the second receiving area is used to receive the second beam b', and the third receiving area is used to receive the second beam c'.

In an optional solution, the radar further includes a receiving lens 109, configured to receive the at least two second beams reflected by the split-beam reflection diaphragm 107, and converge the at least two second beams to the detector 108. The receiving lens 109 is disposed between the split-beam reflection diaphragm 107 and the detector 108, and is configured to adjust the second beams shone onto the detector 108. The receiving lens 109 may be implemented by using different structures, and may use a single lens or a combination of lenses. For example, the receiving lens 109 may use a common lens that refracts divergent rays into parallel rays, such as a single-sided convex lens, a double-sided convex lens, or a prism. Alternatively, the receiving lens 109 may use different lens combinations such as a combination of a convex lens and a concave lens, a combination of a convex lens and a convex lens, or a combination of a convex lens and a prism, to refract divergent rays into parallel rays.

The receiving lens 109 is an optional component. The receiving lens 109 may not be used, and in this case, the second beams reflected by the split-beam reflection diaphragm 107 may be directly shone onto the detector 108.

It may be learned from the foregoing description that, in this application, the first beam diffraction element 103 and the second beam diffraction element 104 are used to enable one light source 101 to emit a plurality of beams, and scanning by the plurality of beams may be implemented by using one reflection assembly 105, thereby increasing a range of the detection area 106 of the radar. In addition, the detection area 106 may be expanded by using one light source 101, so that a structure of the entire radar is simplified, and performance of the radar is improved. In addition, the split-beam reflection diaphragm 107 is used to reflect the second beams, so that the structure of the entire radar is more compact, thereby reducing an occupied area of the radar.

One of the first beam diffraction element 103 and the second beam diffraction element 104 is used for beam splitting, and the other is used for beam combining. In a specific example, the first beam diffraction element 103 may be a beam splitter, and the second beam diffraction element 104 may be a beam combiner. In essence, the beam splitter and the beam combiner are both grating structures. The following lists some specific gratings with reference to the accompanying drawings.

FIG. 4 shows a first grating, the grating 300 is a rectangular grating, and the rectangular grating has rectangular protrusions 301 arranged in a single row. The rectangular grating may be applied to the first beam diffraction element, and the first grating shown in FIG. 4 may be used when the first beam diffraction element obtains an odd quantity of first beams through diffraction. The first grating shown in FIG. 4 may also be applied to the second beam diffraction element.

FIG. 5 shows a second grating, the grating 300 is an isosceles trapezoidal grating, and the isosceles trapezoidal grating has trapezoidal protrusions 302 arranged in a single row. The isosceles trapezoidal grating may be applied to the first beam diffraction element, and the first grating shown in FIG. 5 may be used when the first beam diffraction element obtains an odd quantity of first beams through diffraction.

The grating 300 used when the first beam diffraction element obtains an odd quantity of first beams through diffraction is not limited to the two gratings shown in FIG. 4 and FIG. 5. Another grating with symmetrical protrusions may also be applied to the first beam diffraction element.

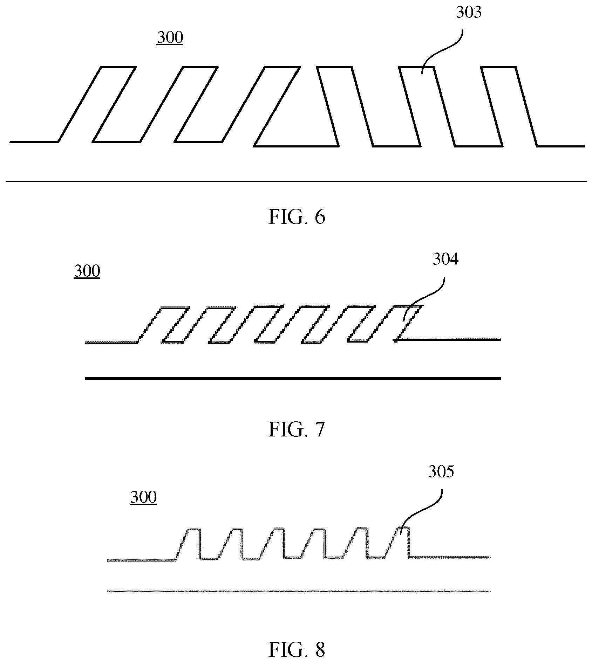

FIG. 6 shows a third grating, the grating 300 is an oblique rectangular grating, and the oblique rectangular grating has oblique rectangular protrusions 303 arranged in a single row. The oblique rectangular protrusions are symmetrical along an axis O of the grating. The oblique rectangular grating may be applied to the first beam diffraction element, and the grating structure shown in FIG. 6 may be used when the first beam diffraction element obtains an even quantity of first beams through diffraction. Certainly, another grating of a symmetrical type (protrusions are symmetrical relative to an axis O) may also be applied to the first beam diffraction element.

FIG. 7 shows a fourth grating 300, the grating is an oblique rectangular grating, and the oblique rectangular grating has oblique rectangular protrusions 304 arranged in a single row. The oblique rectangular protrusions incline in one direction. The oblique rectangular grating 300 may be applied to the second beam diffraction element.

FIG. 8 shows a fifth grating, the grating 300 is a trapezoidal grating, and the trapezoidal grating has trapezoidal protrusions 305 arranged in a single row. The trapezoidal protrusions 305 may be right-angled trapezoidal protrusions. The trapezoidal grating may be applied to the second beam diffraction element.

FIG. 4 to FIG. 8 above merely illustrate some specific grating structures. The first beam diffraction element and the second beam diffraction element provided in this embodiment of this application may alternatively use other gratings that meet functions of the first beam diffraction element and the second beam diffraction element.

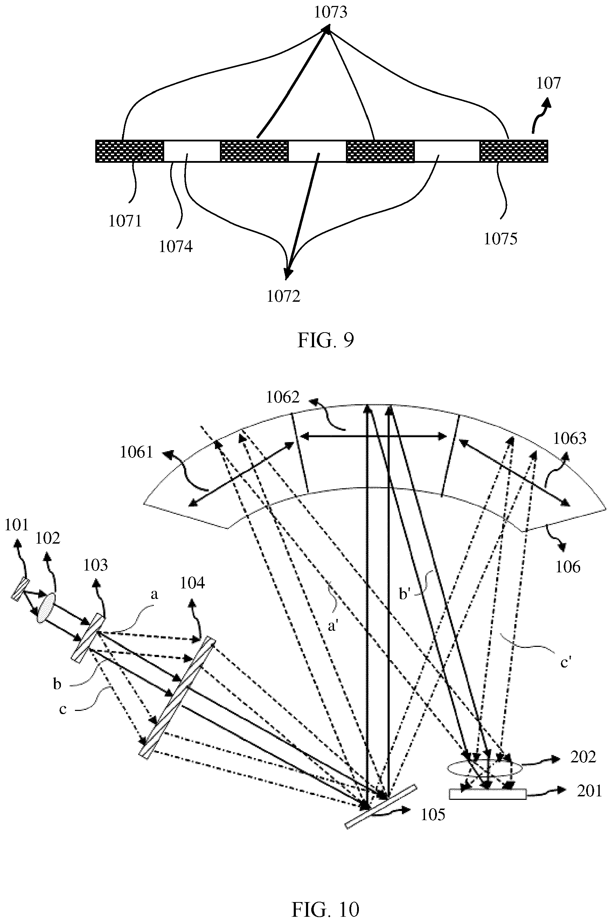

FIG. 9 shows a structure of a split-beam reflection diaphragm. The split-beam reflection diaphragm 107 includes a body 1071, and the body 1071 is of a plate structure having two opposite surfaces: a first surface and a second surface. The first surface faces the second beam diffraction element and is an incident surface of the first beams, and the second surface faces the reflection assembly and is a reflective surface of the second beams.

A light transmission structure 1072 configured to transmit the at least two first beams is disposed on the body 1071. By using the light transmission structure 1072, the first beams may pass through the body 1071 and be emitted from the second surface. A quantity of light transmission structures 1072 is in a one-to-one correspondence with a quantity of first beams, or in a one-to-many correspondence with a quantity of first beams. For example, the first beam a, the first beam b, and the first beam c each correspond to one light transmission structure 1072, and a shape of each light transmission structure 1072 matches a shape of the first beam, so that the first beam may pass through. Alternatively, one light transmission structure 1072 may be used to transmit the first beam a, the first beam b, and the first beam c. Alternatively, one light transmission structure 1072 is used to transmit the first beam a and the first beam b, and another light transmission structure 1072 is used to transmit the first beam c. Specific disposing may be determined based on an actual situation.

The light transmission structure 1072 may use different structures. For example, when the body 1071 is made of a light transmission material, the light transmission structure 1072 is a partial light transmission area of the body 1071. For example, the material of the body 1071 is a material such as glass, light transmission resin, or light transmission plastic.

In an optional solution, a light absorption layer 1075 is disposed on a side (the first surface) that is of the body 1071 and that is close to the second beam diffraction element, and the light absorption layer 1075 avoids the light transmission structure 1072. That is, holes are dug on the light absorption layer 1075, so that a partial area of the first surface of the body 1071 is exposed. The light transmission structure 1072 is a partial light transmission area of the body 1071, and the light transmission area serves as an incident area of the first beams. After being shone to the light transmission area, the first beams may pass through the body 1071. When the light absorption layer 1075 is used, stray light may be prevented from being shone onto the split-beam reflection diaphragm 107, thereby reducing crosstalk of rays, and improving detection accuracy.

For example, the light absorption layer 1075 may be made of Cr, Cr + dielectric, or another material. The foregoing material is an existing material. Therefore, details are not described in this application.

In an optional solution, an anti-reflection layer 1074 is disposed on a side that is of the light transmission area and that is close to the second beam diffraction element. The anti-reflection layer 1074 is configured to reduce reflection of the first beams incident to the light transmission area, so that more first beams are incident to the light transmission area. For example, the anti-reflection layer 1074 may be a multilayer dielectric film made of a material such as SiO₂, Ta₂O₅, or Al₂O₃. The foregoing material is an existing material. Therefore, details are not described in this application.

When the anti-reflection layer 1074 and the light absorption layer 1075 are specifically disposed, the anti-reflection layer 1074 and the light absorption layer 1075 may be disposed at a same layer, or may be located at different layers.

The light transmission structure 1072 may alternatively be a through hole disposed on the body 1071. The through hole penetrates the body 1071, and openings of the through hole are respectively located on the first surface and the second surface. When the light transmission structure 1072 uses the through hole, the material of the body 1071 does not need to be limited, and the body 1071 may use a light transmission material or a non-light transmission material. When the body 1071 uses the non-light transmission material, the light absorption layer 1075 does not need to be disposed, and crosstalk of another ray may be prevented by using the material of the body 1071. When the body 1071 uses the light transmission material, the light absorption layer 1075 may be disposed on the first surface, and the light absorption layer 1075 avoids the through hole.

When the light transmission structure 1072 uses the through hole, reflection is not generated when the first beams pass through the light transmission structure 1072. Therefore, the anti-reflection layer 1074 does not need to be disposed, and the first beams may directly pass through the light transmission structure 1072.

The split-beam reflection diaphragm 107 further includes a reflection layer 1073, and the reflection layer 1073 is disposed on a side (the second surface) that is of the body 1071 and that is close to the reflector. The reflection layer 1073 is configured to reflect the at least two second beams. When disposed, the reflection layer 1073 avoids the light transmission area. Specifically, a through hole corresponding to the light transmission area is disposed on the reflection layer 1073. Regardless of a form of the light transmission structure, the through hole corresponding to the light transmission area needs to be disposed on the reflection layer 1073, to ensure that the first beams may be emitted after passing through the body 1071.

For example, the reflection layer 1073 may be a reflection layer made of Al, Au, or another material having a good reflection effect. The foregoing material is an existing material. Therefore, details are not described in this application.

The reflection layer 1073 may use different structural forms. For example, the reflection layer 1073 and the body 1071 are an integrated structure. In this case, the reflection layer 1073 may be the second surface, and the second surface is processed into a specular surface, to reflect the second beams. Alternatively, the reflection layer 1073 and the body 1071 are independent structures, and the reflection layer 1073 may be bonded to the second surface or directly formed on the second surface.

FIG. 10 shows another radar according to an embodiment of this application. For some reference signs in FIG. 10, refer to the same reference signs in FIG. 3. In this application, same reference signs between different figures represent a same component.

For structures and connection relationships of a light source 101, a first beam diffraction element 103, a second beam diffraction element 104, and a reflection assembly 105 in FIG. 10, refer to the foregoing related description of the first radar, and details are not described herein.

A difference between the radar shown in FIG. 10 and the radar shown in FIG. 3 lies in a placement position of a detector 201. In the radar shown in FIG. 10, the detector 201 directly receives at least two second beams reflected from a detection area 106. When disposed, the detector 201 and a reflector are disposed side by side, and the detector 201 may receive a second beam shone to another area (an area other than the reflector). As shown in FIG. 10, a second beam a', a second beam b', and a second beam c' are reflected from the detection area 106 and directly incident to the detector 201, without reflection by the reflection assembly 105, and with no need to dispose a split-beam reflection diaphragm, thereby simplifying a structure of the entire radar.

For a specific function and structure of the detector 201, refer to the related description of the detector 201 in the radar in FIG. 3, and details are not described herein.

It should be understood that the disposing position of the detector 201 shown in FIG. 10 is only a specific example of the disposing position of the detector 201, and the detector 201 in the radar provided in this embodiment of this application may be disposed based on a position of the second beams that need to be detected.

In an optional solution, the radar shown in FIG. 10 may also include a collimation structure 102 and a receiving lens 202. For specific structures of the collimation structure 102 and the receiving lens 202, refer to the description of the first radar, and details are not described herein.

In a specific feasible solution, the second beams reflected from the detection area 106 may be directly shone onto the detector 201, and in this case, the receiving lens 202 is not needed, thereby simplifying a component of the radar.

It may be learned from the radars shown in FIG. 3 and FIG. 10 that the radar provided in this embodiment of this application achieves an effect of using one light source to detect a plurality of areas through cooperation of the first beam diffraction element, the second beam diffraction element, and the reflection assembly. The detector may be disposed in different manners, and only needs to meet a requirement that the detector may receive the at least two second beams reflected back from the detection area. Whether the detector directly receives or indirectly receives the at least two second beams is not specifically limited in this embodiment of this application.

An embodiment of this application further provides a vehicle, and the vehicle includes but is not limited to a vehicle driven by non-renewable energy or new energy. The vehicle driven by non-renewable energy may include a car, a bus, a truck, and the like that are driven by fuel such as gasoline, diesel, alcohol, and the like. The vehicle driven by new energy may include a car, a bus, a truck, and the like that are driven by electric energy.

As shown in FIG. 1, the vehicle includes an information processing module 200, and the radar 100 according to any one of the foregoing. The information processing module 200 may be a central control computer on the car or another chip having a signal processing function. The information processing module 200 is separately connected to the light source and the detector in the radar 100, to control the radar 100 to work. A specific control manner is a common control manner, and is not described herein. In the foregoing technical solution, through cooperation of the first beam diffraction element and the second beam diffraction element, the ray emitted by the light source is diffracted into the at least two first beams, and detection may be performed by using the two first beams, thereby increasing a range of the detection area. In addition, the detection area may be expanded by using one light source, so that the structure of the entire radar 100 is simplified, and the performance of the radar 100 is improved.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A radar, comprising:
a light source, configured to emit a ray for detection;
a first beam diffraction element, configured to diffract the ray into at least two first beams;
a second beam diffraction element, configured to converge the at least two first beams to a specified position;
a reflection assembly, comprising a reflector configured to reflect the at least two first beams converged to the specified position to a detection area, and a driving mechanism configured to drive the reflector to swing; and
a detector, configured to receive at least two second beams reflected back from the detection area.

2. The radar according to claim 1, wherein the first beam diffraction element is configured to diffract the ray into an odd quantity of first beams.

3. The radar according to claim 1 or 2, wherein the first beam diffraction element is a beam splitter, and the second beam diffraction element is a beam combiner.

4. The radar according to any one of claims 1 to 3, wherein the second beam diffraction element converges the at least two first beams to the specified position, and incident angles of the first beams are different.

5. The radar according to any one of claims 1 to 4, wherein the specified position is a reflective surface of the reflector.

6. The radar according to any one of claims 1 to 5, wherein
the reflector is further configured to reflect the at least two second beams reflected back from the detection area;
the radar further comprises a split-beam reflection diaphragm, and the split-beam reflection diaphragm is located in an optical path between the second beam diffraction element and the reflection assembly; and the split-beam reflection diaphragm is configured to transmit the at least two first beams converged by the second beam diffraction element, and reflect the at least two second beams reflected back by the reflector; and
the detector is configured to receive the at least two second beams reflected by the split-beam reflection diaphragm.

7. The radar according to claim 6, wherein the split-beam reflection diaphragm comprises:
a body, wherein a light transmission structure configured to transmit the at least two first beams is disposed on the body; and
a reflection layer, wherein the reflection layer is disposed on a side that is of the body and that is close to the reflector, and avoids the light transmission structure; and the reflection layer is configured to reflect the at least two second beams.

8. The radar according to claim 7, wherein the light transmission structure is a through hole disposed on the body; or
the light transmission structure is a partial light transmission area of the body.

9. The radar according to claim 7, wherein when the light transmission structure is a partial light transmission area of the body,
an anti-reflection layer is disposed on a side that is of the light transmission area and that is close to the second beam diffraction element.

10. The radar according to any one of claims 7 to 9, wherein the split-beam reflection diaphragm further comprises a light absorption layer, the light absorption layer is disposed on a side that is of the body and that is close to the second beam diffraction element, and the light absorption layer avoids the light transmission structure.

11. The radar according to any one of claims 6 to 10, further comprising a receiving lens, wherein the receiving lens is configured to receive the at least two second beams reflected by the split-beam reflection diaphragm, and converge the at least two second beams to the detector.

12. The radar according to any one of claims 1 to 5, further comprising a collimation structure, wherein the collimation structure is configured to collimate the ray emitted by the light source to the first beam diffraction element.

13. A vehicle, comprising an information processing module and the radar according to any one of claims 1 to 12 that is connected to the information processing module.
